# FASCICULE DE BREVET EUROPEEN

(11) **EP 2 134 951 B1**
(45) Date de publication et mention de la délivrance du brevet: **14.03.2012**
(21) Numéro de dépôt: 08775624.3
(22) Date de dépôt: 29.02.2008
(51) Int. Cl.: F01D 11/00, F16J 15/02, F16J 15/06

(54) **CAPOT D'INVERSEUR DE POUSSEE A GRILLES AVEC SUPPORT DE JOINT ET JOINT ASSOCIE**
GITTERABDECKUNG EINES SCHUBUMKEHRERS MIT DICHTUNGSHALTERUNG UND ENTSPRECHENDER DICHTUNG
GRID THRUST REVERSER COVER COMPRISING A SEAL SUPPORT AND ASSOCIATED SEAL

(30) Priorité: 13.04.2007 FR 0702679
(43) Date de publication de la demande: 23.12.2009
(73) Titulaire: Aircelle, 76700 Gonfreville l'Orcher (FR)
(72) Inventeur: VAUCHEL, Guy, F-76600 Le Havre (FR); LECOSSAIS, Eric, F-76110 Virville (FR); ZOONEKYNDT, Frédéric, F-31170 Tournefeuille (FR)
(74) Mandataire: Gaillarde, Frédéric F. Ch.
(86) Numéro de dépôt international: PCT/FR2008/000284
(87) Numéro de publication internationale: WO 2008/142218

(56) Documents cités:
- FR-A- 2 815 672
- US-A- 4 015 818
- US-A- 4 508 355

## Description

La présente invention se rapporte à un capot d'inverseur de poussée à grilles équipé d'un joint de bord de déviation.

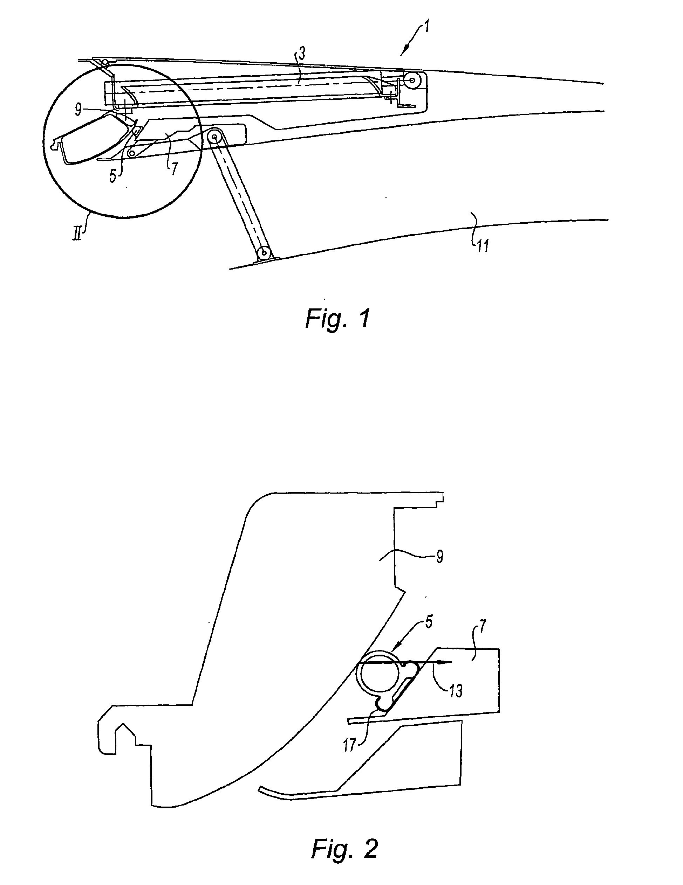

Dans un tel inverseur de poussée 1 à grilles 3 représenté de manière schématique sur la figure 1 ci-jointe, il est nécessaire de prévoir un joint 5 monté sur le capot 7 et venant en contact avec le bord de déviation 9 lorsque l'inverseur est en position fermée (voir par exemple le document FR-A-2 815 672).

Dans cette position en effet, il ne faut pas que de l'air circulant dans la veine d'air froid 11 sous l'effet d'une soufflante de turboréacteur (organes non représentés) puisse s'échapper de cette veine en direction des grilles 3 : le joint 5 permet de réaliser cette étanchéité.

Sous l'effet de la pression exercée par le bord de déviation 9, symbolisée par la flèche 13 de la figure 2, le talon inférieur 15 de ce joint a tendance à sortir du support de joint 17 monté sur le capot 7 : le joint n'assure alors plus sa fonction d'étanchéité, et les pertes de performance sont alors importantes.

L'intervention nécessaire pour remettre le joint 5 en place dans son support 17 est coûteuse, et nécessite une immobilisation de l'avion.

Pour essayer de pallier ce problème, on en arrive à coller le joint 5 au fond de son support 17 : ceci n'est toutefois pas satisfaisant, d'une part parce que malgré la présence de colle, le joint a tendance à sortir de son support, et d'autre part parce que la colle rend compliquées les opérations de remplacement du joint en cas d'usure.

La présente invention a notamment pour but de s'affranchir de ces inconvénients.

On atteint ce but de l'invention avec un capot d'inverseur de poussée à grilles, comprenant un support pour joint et un joint monté dans ce support au moyen de deux talons de fixation, ce joint étant apte à coopérer avec un bord de déviation de cet inverseur de poussée, remarquable en ce qu'au moins l'un desdits talons est retroussé et en ce que ledit support présente une section complémentaire de celle définie par lesdits talons.

Suivant d'autres caractéristiques optionnelles du capot d'inverseur selon l'invention :
- lesdits deux talons sont retroussés : la présence de deux tels talons permet un maintien optimal du joint ;
- lesdits talons s'étendent vers l'extérieur de ce joint : cette forme convient pour placer le joint sur un support en C (voir plus loin) ;
- lesdits talons s'étendent vers l'intérieur de ce joint : cette forme convient pour placer le joint sur un support en forme de rail ou de tube (voir plus loin) ;
- ce joint présente une section symétrique : un tel joint est adapté pour encaisser des efforts répartis de manière symétrique ;
- ce joint présente une section asymétrique : un tel joint est adapté pour encaisser des efforts répartis de manière asymétrique ;
- ce joint comprend des moyens de renfort situés dans ledit au moins un talon : ces moyens de renfort permettent une meilleure tenue du joint dans son support ;
- lesdits moyens de renfort comprennent une structure en vagues : de tels moyens de renfort permettent une déformation longitudinale du joint, adaptée lorsque ce joint est fixée sur des pièces présentant des surfaces gauches ;
- ladite structure en vagues est formée dans un matériau choisi dans le groupe comprenant une matière plastique, une matière métallique, les fibres de verre, les fibres de carbone ;
- au moins un des talons dudit joint présente des encoches permettant l'introduction d'un outil.
- ledit support présente une section en C, la branche de ce C destinée à coopérer avec ledit au moins un talon retroussé étant repliée vers l'intérieur de ce C : cette forme est adaptée pour coopérer avec un joint dont les talons s'étendent vers l'extérieur ;
- les deux branches dudit C sont repliées vers l'intérieur de ce C : la présence de deux telles branches permet un maintien optimal du joint lorsque ce joint est destiné à subir des efforts provenant de toutes les directions ;
- les branches dudit C présentent des jours : ces jours permettent de vérifier si les talons du joint se sont correctement placés dans le support ;
- ce support se présente sous la forme d'un rail ou d'un tube : cette forme de support est adaptée pour coopérer avec un joint dont les talons s'étendent vers l'intérieur du joint.

D'autres caractéristiques et avantages de l'invention apparaîtront à la lumière de la description qui va suivre et à l'examen des figures annexées, dans lesquelles :
- la figure 1 est une vue schématique d'un inverseur à grilles muni d'un joint de la technique antérieure, cette figure ayant été commentée dans le préambule de la présente description,
- la figure 2 est une vue de détail de la zone II de la figure 1, cette figure 2 ayant été également commentée dans le préambule de la présente description,
- la figure 3 est une vue de la section d'un support de joint selon la présente invention,
- la figure 4 est une vue de la section d'un joint adapté pour coopérer avec le support de la figure 3,
- la figure 5 est une vue de ce support et de ce joint lorsqu'ils sont assemblés,
- la figure 6 est une vue d'une variante de ce joint incorporant des moyens de renfort,
- la figure 7 est une vue de dessus des moyens de renfort incorporés dans le joint de la figure 6,
- les figures 8 à 11 sont des vues schématiques indiquant la cinématique de la mise en place du joint selon l'invention dans son support,
- la figure 12 représente une variante du joint selon l'invention,
- la figure 13 représente des moyens de renfort incorporés au joint de la figure 12,
- les figures 14 à 17 indiquent la cinématique de la mise en place de cette variante de joint dans son support associé,
- la figure 18 représente en perspective une variante de support du joint des figures 12 à 17,
- la figure 19 est une vue de la section de ce joint lorsqu'il est installé sur le support de la figure 18,
- la figure 20 représente une autre variante du joint selon l'invention installé sur un support approprié,
- la figure 21 représente une autre variante de support de joint, et
- la figure 22 représente la section d'une autre variante de joint adapté pour coopérer avec le support de la figure 21.

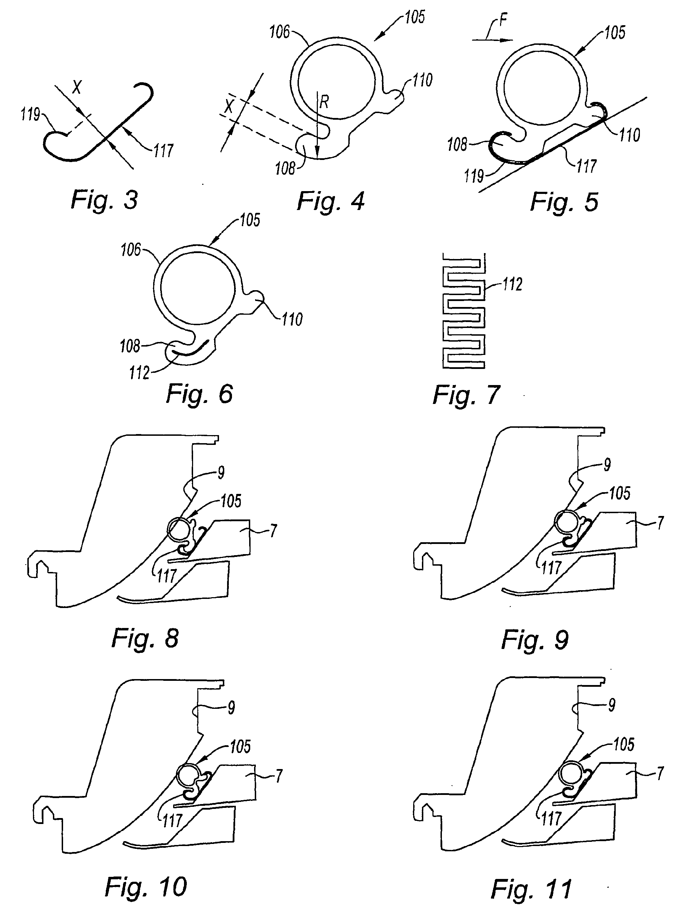

On se reporte maintenant à la figure 3, sur laquelle on peut voir que, selon une première variante, un support 117 de joint selon l'invention peut présenter une section sensiblement en C, l'une 119 des deux branches de ce support étant repliée vers l'intérieur du C, comme cela est représenté.

Ce support 117 est adapté pour recevoir le joint 105 représenté à la figure 4, lequel comprend, d'une part, un corps 106 de section sensiblement circulaire, et deux talons 108, 110 s'étendant vers l'extérieur du corps 106, l'un 108 de ces deux talons étant retroussé en direction du corps 106, comme cela est représenté sur figure 4.

L'épaisseur X de ce talon est adaptée pour correspondre à l'ouverture X de la branche 119 du support 117 (voir figure 3).

En outre, le rayon R du talon 108 est adapté pour permettre une mise en place du joint 105 à l'intérieur du support 117 comme représenté sur la figure 5.

La notion de retroussement signifie, dans le cadre de la présente invention, que le talon 108 est recourbé sur lui-même, et que la branche 119 du support 117 assure le recouvrement de la quasi-totalité de ce talon, de manière à empêcher le désengagement de ce talon de cette branche sous l'action d'efforts orientés notamment selon la direction de la flèche F visible sur la figure 5.

De manière à assurer une tenue optimale du talon 108 à l'intérieur de la branche 119 du support 117, on peut prévoir de noyer dans le matériau formant le joint 105 (typiquement du silicone) des moyens de renfort 112.

Comme représenté sur la figure 7, ces moyens de renfort peuvent typiquement comprendre un organe en forme de vagues, formé dans une matière plastique, ou bien dans une matière métallique, ou bien dans un matériau à base de fibre de verre ou de carbone.

La cinématique de la mise en place du joint 105 à l'intérieur du support 117 est visible sur les figures 8 à 11 :
- on commence par faire rentrer le talon 108 à l'intérieur de la branche 119 du support 117 (figures 8 et 9),
- ensuite on comprime le talon 110 en direction du talon 108 de manière à faire rentrer ce talon 110 dans l'autre branche du support 117 (figure 10),
- enfin on relâche le joint de manière que le talon 110 du joint 105 vienne prendre place dans l'autre branche du support 117 (figure 11).

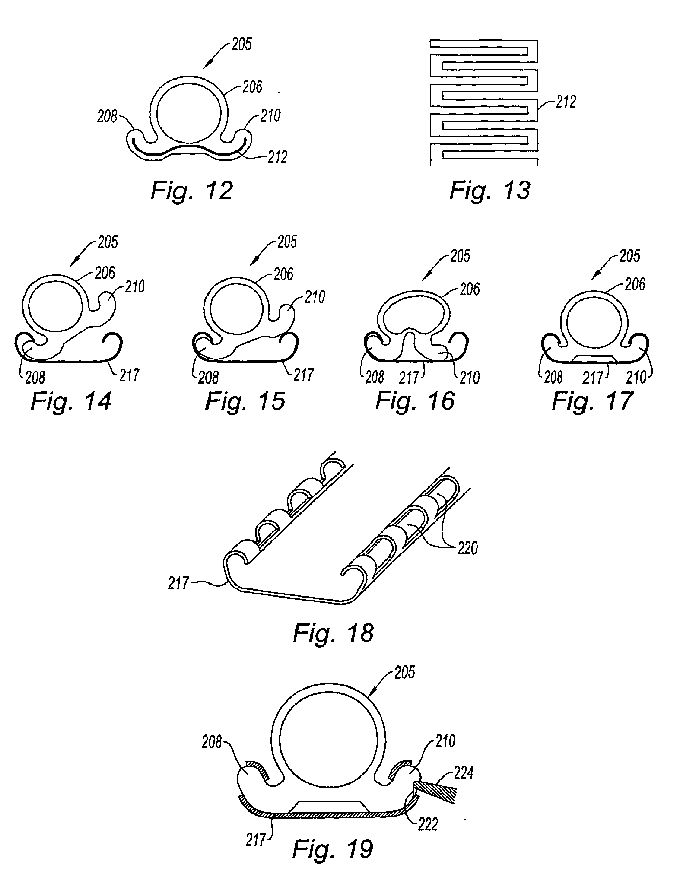

Dans la variante représentée à la figure 12, le joint 205 selon l'invention présente une section sensiblement symétrique, c'est-à-dire que les deux talons 208, 210 s'étendent vers l'extérieur du corps 206 de ce joint, et sont retroussés en direction de ce corps.

De même que précédemment, on peut prévoir un organe de renfort 212 présentant des vagues noyées dans la matière formant les deux talons 208, 210 du joint 205 (voir figure 13).

La cinématique de la mise en place de cette variante de joint selon l'invention est sensiblement analogue à celle du joint précédent :
- on commence par positionner l'un 208 des deux talons à l'intérieur de l'une des branches d'un support 217 de section symétrique (figures 14 et 15),
- puis on comprime le joint de manière à positionner l'autre talon 210 dans l'autre branche du support symétrique 217 (figure 16), et
- on relâche le joint 205 de manière que cet autre talon 210 vienne se loger correctement à l'intérieur de cette autre branche du support symétrique 217 (figure 17).

Comme on peut le voir sur la figure 18, on peut prévoir que le support 217 présente des jours dans ses deux branches, permettant de visualiser le positionnement correct des deux talons 208, 210 à l'intérieur de ces branches.

On peut d'ailleurs prévoir, comme cela est représenté sur la figure 19, que les talons 208, 210 du joint 205 présentent des encoches 222 permettant l'introduction d'un outil 224 au cas où ces talons ne seraient pas correctement mis en place dans les branches du support 217.

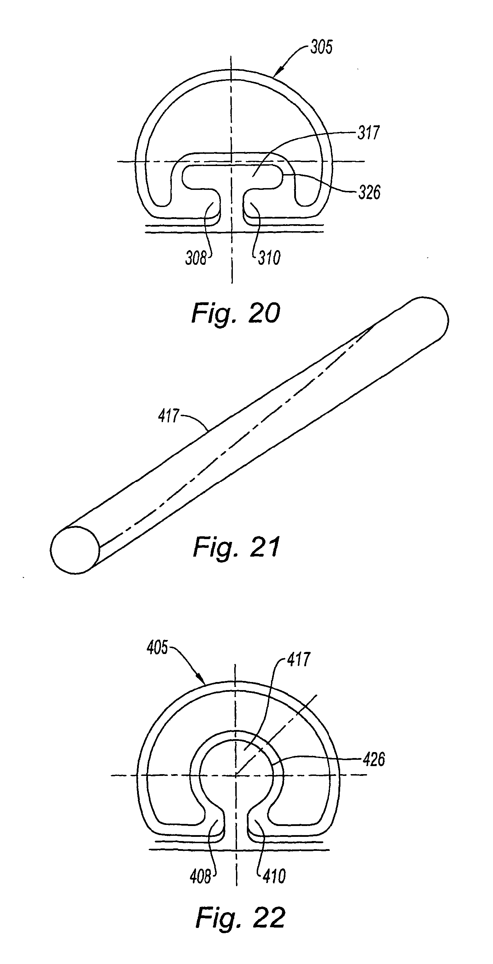

Dans la variante représentée à la figure 20, le joint 305 présente deux talons 308, 310 repliés vers l'intérieur de ce joint, et définissant ainsi une cavité 326 apte à venir à s'encapsuler sur un rail de support 317.

Dans la variante représentée à la figure 21, le rail de support 417 présente une section sensiblement circulaire (tube), et la cavité 426 associée du joint 405 présente une section circulaire correspondante.

Le mode de fonctionnement et les avantages du joint et de son support associé qui viennent d'être décrits résultent directement de la description qui précède.

Le ou les talons retroussé(s) du joint (vers l'extérieur : figures 8 à 19, et vers l'intérieur : figures 20 à 22) permette(nt) un encastrement du joint sur son support associé.

Cet encastrement nécessite une déformation élastique du joint, et lorsque le joint reprend sa forme, il est maintenu de manière très stable dans/sur son support associé.

L'utilisation des moyens de renfort 112, 212 permet d'assurer une tenue optimale des talons du joint dans son support associé, tout en autorisant une déformation de ce joint dans sa direction longitudinale, de manière à lui permettre d'épouser le profil des pièces avec lesquelles ce joint est destiné à coopérer.

Grâce à l'excellente tenue du joint selon l'invention dans/sur son moyen de support, il n'est plus nécessaire de prévoir de coller ce joint, ce qui facilite considérablement les opérations de remplacement de ce joint en cas d'usure.

Le choix de la forme de joint et de son support associé dépendent de la direction des forces auxquelles ce joint est soumis.

En particulier, on notera que la variante représentée aux figures 3 à 11 convient particulièrement pour une situation où le joint est soumis à des forces provenant essentiellement de la direction F et visible sur la figure 5.

En revanche, les variantes représentées sur les figures 12 à 22 conviennent plus particulièrement à des situations où le joint peut être sollicité par des forces provenant de toutes les directions.

Bien entendu, la présente invention n'est nullement limitée à l'exemple décrit et représenté, fourni à titre de simple exemple.

## Revendications

1. Capot d'inverseur de poussée à grilles, comprenant un support pour joint (117 ; 217 ; 317 ; 417) et un joint (105 ; 205 ; 305 ; 405) monté dans ce support au moyen de deux talons de fixation (108, 110 ; 208, 210 ; 308, 310 ; 408, 410), ce joint étant apte à coopérer avec un bord de déviation (9) de cet inverseur de poussée, **caractérisé en ce qu'**au moins l'un (108 ; 208, 210 ; 308, 310 ; 408, 410) desdits talons est retroussé, c'est-à-dire recourbé sur lui-même, et **en ce que** ledit support présente une section complémentaire de celle définie par lesdits talons, de manière à recouvrir la quasi-totalité de ces talons, et à empêcher ainsi le désengagement de ces talons dudit support sous l'action des efforts de pression exercés par ledit bord de déviation sur ledit joint.

2. Capot selon la revendication 1, **caractérisé en ce que** lesdits deux talons (208, 210 ; 308, 310 ; 408, 410) sont retroussés.

3. Capot selon l'une des revendications 1 ou 2, **caractérisé en ce que** lesdits talons (108, 110 ; 208, 210) s'étendent vers l'extérieur du joint (105 ; 205).

4. Capot selon l'une quelconque des revendications 1 à 3, **caractérisé en ce que** lesdits talons (308, 310 ; 408, 410) s'étendent vers l'intérieur de ce joint (305 ; 405).

5. Capot selon l'une quelconque des revendications précédentes, **caractérisé en ce que** ledit joint (205 ; 305 ; 405) présente une section symétrique.

6. Capot selon l'une quelconque des revendications précédentes, **caractérisé en ce que** ledit joint (105) présente une section asymétrique.

7. Capot selon l'une quelconque des revendications précédentes, **caractérisé en ce que** ledit joint (105 ; 205) comprend des moyens de renfort (112 ; 212) situés dans ledit au moins un talon (108, 110 ; 208, 210).

8. Capot selon la revendication 7, **caractérisé en ce que** lesdits moyens de renfort (112 ; 212) comprennent une structure en vagues.

9. Capot selon l'une des revendications 7 ou 8, **caractérisé en ce que** ladite structure en vagues (112 ; 212) est formée dans un matériau choisi dans le groupe comprenant une matière plastique, une matière métallique, les fibres de verre, les fibres de carbone.

10. Capot selon l'une quelconque des revendications précédentes, **caractérisé en ce qu'**au moins un des talons (208, 210) dudit joint présente des encoches (222) permettant l'introduction d'un outil (224).

11. Capot selon la revendication 3, **caractérisé en ce que** ledit support (117 ; 217) présente une section en C, la branche (119) de ce C destinée à coopérer avec ledit au moins un talon retroussé (108) étant repliée vers l'intérieur de ce C.

12. Capot selon les revendications 2, 3 et 11, **caractérisé en ce que** les deux branches dudit C sont repliées vers l'intérieur de ce C.

13. Capot selon l'une des revendications 11 et 12, **caractérisé en ce que** les branches dudit C présentent des jours (220).

14. Capot selon la revendication 4, **caractérisé en ce que** ledit support (317 ; 417) se présente sous la forme d'un rail ou d'un tube.

## Claims

1. A grid thrust reverser cowl, comprising a seal support (117; 217; 317; 417) and a seal (105; 205; 305; 405) mounted in that support using two fastening heels (108, 110; 208, 210; 308, 310; 408, 410), this seal being able to cooperate with a deflector edge (9) of said thrust reverser, **characterized in that** at least one (108; 208, 210; 308, 310; 408, 410) of said heels is turned up, i.e. curved on itself, and **in that** said support has a section complementary to that defined by said heels, so as to cover nearly all of said heels, and thereby prevent said heels from becoming disengaged from said support under the action of pressure forces exerted by said deflector edge on said seal.

2. The cowl according to claim 1, **characterized in that** said two heels (208, 210; 308, 310; 408, 410) are turned up.

3. The cowl according to one of claims 1 or 2, **characterized in that** said heels (108, 110; 208, 210) extend toward the outside of the seal (105; 205).

4. The cowl according to one of claims 1 to 3, **characterized in that** said heels (308, 310; 408, 410) extend toward the inside of said seal (305, 405).

5. The cowl according to any one of the preceding claims, **characterized in that** said seal (205; 305; 405) has a symmetrical section.

6. The cowl according to any one of the preceding claims, **characterized in that** said seal (105) has an asymmetrical section.

7. The cowl according to any one of the preceding claims, **characterized in that** said seal (105; 205) comprises reinforcing means (112; 212) situated in said at least one heel (108, 110; 208, 210).

8. The cowl according to claim 7, **characterized in that** said reinforcing means (112; 212) comprise a wave structure.

9. The cowl according to one of claims 7 or 8, **characterized in that** said wave structure (112; 212) is formed from a material chosen from the group comprising a plastic, a metal, glass fibers, and carbon fibers.

10. The cowl according to any one of the preceding claims, **characterized in that** at least one of the heels (208, 210) of said seal has notches (222) making it possible to insert a tool (224).

11. The cowl according to claim 3, **characterized in that** said support (117; 217) has a C-shaped section, the branch (119) of the C intended to cooperate with said at least one turned-up heel (108) being folded toward the inside of said C.

12. The cowl according to claims 2, 3 and 11, **characterized in that** the two branches of said C are folded toward the inside of the C.

13. The cowl according to one of claims 11 and 12, **characterized in that** the branches of said C have openings (220).

14. The cowl according to claim 4, **characterized in that** said support (317; 417) assumes the form of a rail or tube.

## Patentansprüche

1. Haube für Schubumkehr mit Gittern, die eine Dichtungsauflage (117; 217; 317; 417) und eine in diese Auflage mit zwei Befestigungsfüßen (108, 110; 208, 210; 308, 310; 408, 410) montierte Dichtung (105; 205; 305; 405) umfasst, wobei diese Dichtung imstande ist, mit einem Ablenkrand (9) dieser Schubumkehr zusammenzuarbeiten, **dadurch gekennzeichnet, dass** mindestens einer (108; 208, 210; 308, 310; 408, 410) der Füße geschürzt, das heißt, zu sich selbst gebogen, ist, und dass die Auflage einen komplementären Querschnitt zu dem aufweist, der von den Füßen definiert wird, um quasi den gesamten Fuß zu bedecken und um dadurch das Lösen dieser Füße aus der Auflage unter der Einwirkung von Druckkräften zu verhindern, die vom Ablenkrand auf die Dichtung ausgeübt werden.

2. Haube nach Anspruch 1, **dadurch gekennzeichnet, dass** die zwei Füße (208, 210; 308, 310; 408, 410) geschürzt sind.

3. Haube (1) nach einem der Ansprüche 1 oder 2, **dadurch gekennzeichnet, dass** sich die Füße (108, 110; 208, 210) nach außerhalb der Dichtung (105; 205) erstrecken.

4. Haube nach einem der Ansprüche 1 bis 3, **dadurch gekennzeichnet, dass** sich die Füße (308, 310; 408, 410) nach innerhalb dieser Dichtung (305; 405) erstrecken.

5. Haube nach einem der vorangehenden Ansprüche, **dadurch gekennzeichnet, dass** die Dichtung (205; 305; 405) einen symmetrischen Querschnitt aufweist.

6. Haube nach einem der vorangehenden Ansprüche, **dadurch gekennzeichnet, dass** die Dichtung (105) einen asymmetrischen Querschnitt aufweist.

7. Haube nach einem der vorangehenden Ansprüche, **dadurch gekennzeichnet, dass** die Dichtung (105; 205) Verstärkungsmittel (112; 212) umfasst, die sich in mindestens einem Fuß (108, 110; 208, 210) befinden.

8. Haube nach Anspruch 7, **dadurch gekennzeichnet, dass** die Verstärkungsmittel (112; 212) eine Wellenstruktur umfassen.

9. Haube nach einem der Ansprüche 7 oder 8, **dadurch gekennzeichnet, dass** die Wellenstruktur (112; 212) von einem Material gebildet wird, das aus der Gruppe ausgewählt ist, die einen Kunststoff, ein Metall, die Glasfasern, die Karbonfasern umfasst.

10. Haube nach einem der vorangehenden Ansprüche, **dadurch gekennzeichnet, dass** mindestens einer der Füße (208, 210) der Dichtung Kerben (222) aufweist, die das Einführen eines Werkzeugs (224) erlauben.

11. Haube nach Anspruch 3, **dadurch gekennzeichnet, dass** die Auflage (117; 217) einen C-förmigen Querschnitt aufweist, wobei der Arm (119) dieses C, der nach innerhalb dieses C gebogen ist, dazu bestimmt ist, mit dem mindestens einen geschürzten Fuß (108) zusammenzuarbeiten.

12. Haube nach den Ansprüchen 2, 3 und 11, **dadurch gekennzeichnet, dass** die zwei Arme des C nach innerhalb dieses C gebogen sind.

13. Haube nach einem der Ansprüche 11 und 12, **dadurch gekennzeichnet, dass** die Arme des C Durchbrüche (220) aufweisen.

14. Haube nach Anspruch 4, **dadurch gekennzeichnet, dass** die Auflage (317; 417) die Form einer Schiene oder eines Rohrs aufweist.
